# EUROPEAN PATENT APPLICATION

(11) **EP 4 620 606 A1**
(43) Date of publication of application: **24.09.2025**
(21) Application number: 24881172.1
(22) Date of filing: 08.08.2024
(51) Int. Cl.: B23K 9/29, C23C 24/10

(54) **COPPER NOZZLE, AND COPPER NOZZLE ASSEMBLY AND LASER WELDING DEVICE COMPRISING SAME**

(30) Priority: 26.10.2023 CN 202322885306 U
(71) Applicant: Contemporary Amperex Technology Co., Limited, Ningde, Fujian 352100 (CN)
(72) Inventor: HUANG, Chaoqun, Ningde, Fujian 352100 (CN); SONG, Lei, Ningde, Fujian 352100 (CN); CHEN, Shengdong, Ningde, Fujian 352100 (CN)
(74) Representative: Ziebig Hengelhaupt Intellectual Property Attorneys Patentanwaltskanzlei PartGmbB
(86) International application number: PCT/CN2024/110607
(87) International publication number: WO 2025/086803

(57) **Abstract**

A copper nozzle (10), a copper nozzle assembly (100), and laser welding equipment having the copper nozzle assembly are provided, where the copper nozzle is used for laser welding, the copper nozzle includes: a copper nozzle body (11), the copper nozzle body having a laser channel (101); and a protective layer, where the protective layer covers a surface of the copper nozzle body, a reflectance coefficient of the protective layer is greater than a reflectance coefficient of copper, and a melting point of the protective layer is greater than a melting point of copper, which can extend the service life of the copper nozzle and make cleaning of the copper nozzle convenient.

## Description

### CROSS-REFERENCE TO RELATED APPLICATIONS

This application is based on and claims priority to Chinese Patent Application No. 202322885306.7, filed on October 26, 2023, which is incorporated herein by reference in its entirety.

### TECHNICAL FIELD

This application relates to the technical field of welding equipment, and more particularly, to a copper nozzle, a copper nozzle assembly, and laser welding equipment having the copper nozzle assembly.

### BACKGROUND

During the manufacturing process of a battery cell, a top cover needs to be welded to a battery housing. Currently, the top cover and the housing are typically made of an aluminum alloy material with high reflectivity. During laser welding, reflected laser light is easily absorbed by a copper nozzle, causing the copper nozzle to be prone to ablation and oxidation. This may lead to pit formation and deformation on the surface of the copper nozzle, resulting in a short service life of the copper nozzle, poor welding effects on the battery cell, and a reduced welding yield.

### SUMMARY

This application is intended to resolve at least one of the technical problems in the prior art. To this end, this application provides a copper nozzle capable of improving welding effects, enhancing welding yield, and extending the service life of the copper nozzle.

This application further provides a copper nozzle assembly having the copper nozzle described above.

This application further provides laser welding equipment having the copper nozzle assembly described above.

According to a first aspect of this application, a copper nozzle is provided for laser welding, where the copper nozzle includes: a copper nozzle body, the copper nozzle body having a laser channel; and a protective layer, the protective layer covering a surface of the copper nozzle body, where a reflectance coefficient of the protective layer is greater than a reflectance coefficient of copper, and a melting point of the protective layer is greater than a melting point of copper.

According to the copper nozzle of this application, the protective layer is provided on the surface of the copper nozzle with the reflectance coefficient of the protective layer being greater than the reflectance coefficient of copper and the melting point of the protective layer being greater than the melting point of copper, which significantly extends the service life of the copper nozzle and makes cleaning of the copper nozzle convenient. The likelihood of ablation or deformation of the copper nozzle during welding operations is reduced, enabling a housing and a top cover of a battery cell to achieve better welding effects and significantly improving the welding yield of laser welding.

In some embodiments of this application, the melting point of the protective layer is greater than 1200°C.

In these embodiments, setting the melting point of the protective layer to be greater than 1200°C enables the protective layer to have a sufficiently high melting point, preventing the protective layer from being prone to ablation under laser irradiation. This reduces the likelihood of pit formation or deformation on the surface of the copper nozzle during welding operations, extends the service life of the copper nozzle, allows stable and effective welding of the battery cell by the laser, and improves the welding yield.

In some embodiments of this application, the melting point of the protective layer is greater than or equal to 1800°C.

In these embodiments, the melting point of the protective layer is further limited to be greater than or equal to 1800°C, which enables the protective layer to better withstand laser irradiation, further reducing the probability of ablation and deformation of the copper nozzle. This enhances the stability and durability of the copper nozzle, allowing the battery cell to achieve better welding effects and further improving the welding yield of laser welding.

In some embodiments of this application, the reflectance coefficient of the protective layer is greater than or equal to 90%.

In these embodiments, setting the reflectance coefficient of the protective layer to be greater than or equal to 90% ensures that the surface of the copper nozzle is subjected to only a minimal heating effect from laser radiation. This further reduces the likelihood of ablation and thermal deformation on the surface of the copper nozzle, allowing the copper nozzle to maintain a good surface structure. Consequently, during welding of the housing and the top cover of the battery cell by the laser, the copper nozzle can stably and effectively guide a protective gas, enabling the portion to be welded to achieve stable and effective welding effects, thereby further improving the welding yield.

In some embodiments of this application, the protective layer is a bright chromium layer.

In these embodiments, the protective layer is provided as the bright chromium layer, which allows the protective layer to form a smooth surface on the copper nozzle body, providing good reflectivity to laser light and enhancing the overall structural strength of the copper nozzle. This reduces the likelihood of ablation or deformation of the copper nozzle during welding, resulting in better laser welding effects. The smooth surface formed by the protective layer also facilitates cleaning of weld slag from the copper nozzle after welding.

In some embodiments of this application, a thickness of the protective layer is greater than 0.01 mm.

In these embodiments, setting the thickness of the protective layer to be greater than 0.01 mm ensures that the protective layer has sufficient thickness to reduce the likelihood of ablation and deformation on the surface of the protective layer. This enables the copper nozzle to stably guide the protective gas, making the welding operation of the housing and the top cover of the battery cell more stable and reliable.

In one embodiment of this application, the thickness of the protective layer is less than or equal to 0.1 mm.

In this embodiment, limiting the thickness of the protective layer to be less than or equal to 0.1 mm ensures that the thickness of the protective layer does not become excessively thick while meeting welding requirements, avoiding additional production costs during the manufacturing of the copper nozzle. This reduces the production cost of the copper nozzle to a certain extent.

In one embodiment of this application, the thickness of the protective layer is less than or equal to 0.05 mm.

In this embodiment, the thickness of the protective layer is further limited to be less than or equal to 0.05 mm, which reduces the cost of manufacturing the protective layer, thereby further lowering the production cost of the copper nozzle.

In some embodiments of this application, the protective layer covers at least an end face, an inner wall surface, and an outer peripheral surface of an end of the copper nozzle body oriented toward an outlet of the laser channel.

In these embodiments, the protective layer is provided to cover at least the end face, the inner wall surface, and the outer peripheral surface of the end of the copper nozzle body oriented toward the outlet of the laser channel, which effectively enhances reflection and reduces ablation and deformation of the copper nozzle. This allows the end face, the inner wall surface, and the outer peripheral surface of the copper nozzle oriented toward the outlet of the laser welding channel to maintain a good surface structure during welding, reducing the likelihood of ablation pits and structural deformation. Consequently, the copper nozzle achieves a good service life and can stably and reliably guide the protective gas, ensuring stable and effective laser welding.

In some embodiments of this application, the end of the copper nozzle body oriented toward the outlet of the laser channel is formed as a tapered section, with a cross-sectional dimension of the tapered section gradually decreasing in a direction from an inlet to the outlet of the laser channel, and the protective layer completely covers an inner surface and an outer surface of the tapered section.

In these embodiments, the end of the copper nozzle body oriented toward the outlet of the laser channel is formed as the tapered section, with the cross-sectional dimension of the tapered section gradually decreasing in the direction from the inlet to the outlet of the laser channel, which reduces the likelihood of contact between the copper nozzle and the battery cell during welding movement to a certain extent. This ensures a good welding environment for the portion to be welded under the flow of the protective gas, allowing the battery cell to achieve good welding effects. Completely covering the inner surface and the outer surface of the tapered section with the protective layer enables the copper nozzle to maintain a good surface structure, stably and effectively guiding the protective gas, thereby improving laser welding effects and enhancing the welding yield.

In one embodiment of this application, the copper nozzle body further includes: a connecting section, the connecting section being connected to an end of the tapered section facing away from the outlet of the laser channel, an outer surface of the connecting section being formed with external threads, and the protective layer completely covering the external threads.

In this embodiment, the copper nozzle body is provided with the connecting section having the external threads, enabling easy assembly and disassembly of the copper nozzle. The connecting section has a simple structure and exhibits good usability. Completely covering the external threads with the protective layer effectively enhances high-temperature resistance at the external threads and reduces oxidation of the external threads. This allows for easier and more convenient disassembly of the copper nozzle after welding operations or when replacement is needed, reducing downtime for replacing the copper nozzle and improving welding operation efficiency and production capacity of the battery cell.

In some embodiments of this application, the copper nozzle body is a chromium-zirconium copper alloy component.

In these embodiments, the copper nozzle body is provided as the chromium-zirconium copper alloy component, which enables the copper nozzle to maintain its shape effectively during welding, significantly extending the service life of the copper nozzle and allowing more stable and reliable guidance of the protective gas. This ensures stable and effective welding effects for the housing and the top cover of the battery cell.

According to a second aspect of this application, a copper nozzle assembly includes: the copper nozzle according to the first aspect of this application; and a connecting pipe, the connecting pipe being connected to an end of the copper nozzle oriented toward an inlet of the laser channel.

According to the copper nozzle assembly of this application, the copper nozzle of the first aspect described above is incorporated, providing the protective layer on the surface of the copper nozzle with the reflectance coefficient of the protective layer being greater than the reflectance coefficient of copper and the melting point of the protective layer being greater than the melting point of copper, which significantly extends the service life of the copper nozzle and makes cleaning of the copper nozzle convenient. The likelihood of ablation or deformation of the copper nozzle during welding operations is reduced, enabling the housing and the top cover of the battery cell to achieve better welding effects and significantly improving the welding yield of laser welding.

In some embodiments of this application, the connecting pipe is threadedly connected to the copper nozzle.

In these embodiments, the connecting pipe is threadedly connected to the copper nozzle, featuring a simple structure that ensures secure and reliable connection. This facilitates assembly and disassembly of the copper nozzle and the connecting pipe, enabling convenient replacement of the copper nozzle.

In one embodiment of this application, the copper nozzle has external threads for threaded connection with the connecting pipe, and the copper nozzle assembly further includes: a fastening nut, the fastening nut being threadedly sleeved on the external threads of the copper nozzle and disposed between the connecting pipe and the copper nozzle.

In this embodiment, the fastening nut is provided to secure the connecting pipe and the copper nozzle, which ensures stable and reliable connection and fixation between the copper nozzle and the connecting pipe after threaded connection and distance adjustment, enhancing the stability and firmness of the connection between the copper nozzle and the connecting pipe.

In some embodiments of this application, an end of the connecting pipe oriented toward the copper nozzle has a constricted section, with a cross-sectional dimension of the constricted section gradually decreasing in a direction from the connecting pipe toward the copper nozzle.

In these embodiments, the constricted section with the gradually decreasing cross-sectional dimension at the end of the connecting pipe oriented toward the copper nozzle is formed, which provides a larger space on the side of the copper nozzle oriented toward the connecting pipe. This reduces obstruction by the end of the connecting pipe oriented toward the copper nozzle to weld slag and smoke generated during laser welding as the weld slag splashes or the smoke escapes toward the outside of the copper nozzle assembly, facilitating stable and effective laser welding operations to a certain extent.

According to a third aspect of this application, laser welding equipment includes the copper nozzle assembly according to the second aspect of this application.

According to the laser welding equipment of this application, the copper nozzle assembly of the second aspect described above is incorporated, providing the protective layer on the surface of the copper nozzle with the reflectance coefficient of the protective layer being greater than the reflectance coefficient of copper and the melting point of the protective layer being greater than the melting point of copper, which significantly extends the service life of the copper nozzle and makes cleaning of the copper nozzle convenient. The likelihood of ablation or deformation of the copper nozzle during welding operations is reduced, enabling the housing and the top cover of the battery cell to achieve better welding effects and significantly improving the welding yield of laser welding.

Additional aspects and advantages of this application will be partially given in the following description, some of which will become apparent from the following description or be understood through practice of this application.

### BRIEF DESCRIPTION OF DRAWINGS

FIG. 1 is an exploded view of a copper nozzle assembly according to an embodiment of this application;
FIG. 2 is a schematic diagram of a copper nozzle according to an embodiment of this application;
FIG. 3 is a schematic diagram of a battery cell according to an embodiment of this application;
FIG. 4 is an exploded view of the battery cell according to the embodiment of this application; and
FIG. 5 is a schematic diagram of the copper nozzle assembly welding the battery cell according to the embodiment of this application.

### Reference signs:

10. copper nozzle; 101. laser channel;
11. copper nozzle body; 111. connecting section; 112. tapered section;
20. connecting pipe; 21. constricted section; 30. fastening nut;
100. copper nozzle assembly; 200. battery cell; 210. housing; and 220. top cover.

### DESCRIPTION OF EMBODIMENTS

The following describes in detail embodiments of technical solutions of this application with reference to the accompanying drawings. The following embodiments are merely intended for a clearer description of the technical solutions of this application and therefore are used as examples that do not constitute any limitations on the protection scope of this application.

Unless otherwise defined, all technical and scientific terms used herein have the same meanings as commonly understood by persons skilled in the technical field to which this application pertains. Terms used herein are solely for the purpose of describing specific embodiments and are not intended to limit this application. The terms "include", "comprise", "have", and any other variations thereof in the specification, claims, and brief descriptions of the drawings of this application, as well as any variations thereof, are intended to cover non-exclusive inclusion.

In the description of the embodiments of this application, technical terms such as "first" and "second" are used only to distinguish different objects and should not be construed as indicating or implying relative importance or implicitly specifying the number, specific order, or primary-secondary relationship of the technical features indicated. In the description of the embodiments of this application, "a plurality of" means at least two unless otherwise specifically stated.

In this specification, reference to "embodiment" means that specific features, structures, or characteristics described with reference to the embodiment may be incorporated in at least one embodiment of this application. The appearance of this phrase in various places in the specification does not necessarily refer to the same embodiment, nor does it refer to an independent or alternative embodiment mutually exclusive with other embodiments. Persons skilled in the art explicitly and implicitly understand that the embodiments described herein may be combined with other embodiments.

In the description of the embodiments of this application, technical terms such as "width," "thickness," "upper," "lower," "front," "rear," "top," "bottom," "inner," "outer," "axial," "radial," and "circumferential" indicate orientations or positional relationships based on the orientations or positional relationships shown in the drawings. These terms are used solely for the convenience of describing the embodiments of this application and simplifying the description, and do not indicate or imply that the devices or elements referred to must have a specific orientation, be constructed, or operate in a specific orientation. Therefore, these terms should not be construed as limitations on the embodiments of this application.

In the description of the embodiments of this application, unless explicitly specified and defined otherwise, the terms "mounting", "connection", "join", and "fastening" should be understood in a broad sense. For example, a connection may be a fixed connection, a detachable connection, or an integral formation; a connection may be a mechanical connection or an electrical connection; a connection may be a direct connection or an indirect connection via an intermediate medium; or a connection may refer to internal communication between two elements or an interaction relationship between two elements. Persons skilled in the art can understand the specific meanings of the above terms in the embodiments of this application based on specific circumstances.

Currently, from a perspective of market development, application of power batteries is being more extensive. Power batteries have been not only used in energy storage power supply systems such as hydroelectric power plants, heat power plants, wind power plants, and solar power plants, but also widely used in many other fields including electric transportation tools such as electric bicycles, electric motorcycles, and electric vehicles, military equipment, and aerospace.

In welding a housing and a top cover of a battery cell, a laser is directed from a copper nozzle toward a portion to be welded between the housing and the top cover. A protective gas flows out from the same side as the laser to protect the laser welding area. Specifically, the protective gas expels air from the portion to be welded to reduce oxidation during welding, suppresses the formation of plasma clouds during laser welding, and mitigates the impact of plasma clouds on laser welding, enabling more stable and effective laser welding.

When the laser irradiates the housing and the top cover, due to reflection from the housing or the top cover, the laser easily irradiates the surface of the copper nozzle, the end face at the laser outlet, and the inner surface of the copper nozzle. Under the effect of laser irradiation, the outer surface, inner surface, and end face of the copper nozzle are prone to ablation and deformation. This causes the protective gas flowing from the copper nozzle to experience reduced flow velocity, turbulence, or changes in flow direction due to the uneven wall surfaces of the inner surface and end face of the copper nozzle. Consequently, the protective effect of the protective gas on the portion to be welded decreases, such as allowing air to remain at the portion to be welded between the housing and the top cover or failing to fully cover the portion to be welded with the protective gas. This results in poor welding effects between the housing and the top cover, leading to a reduced welding yield. The welding yield herein refers to the proportion of defect-free battery cells after welding relative to the total number of battery cells.

Ablation and deformation of the copper nozzle under laser irradiation significantly shorten the service life of the copper nozzle, necessitating frequent replacement of the copper nozzle to meet welding requirements.

Based on the above considerations, to extend the service life of the copper nozzle and improve welding effects to enhance the welding yield, this application provides a copper nozzle 10. A protective layer with a high reflectance coefficient and a high melting point is provided on the surface of the copper nozzle 10, enabling laser light irradiating the surface of the copper nozzle 10 to be effectively reflected by the protective layer. This reduces energy absorption of laser radiation by the copper nozzle 10, significantly lowering the likelihood of ablation and deformation of the copper nozzle 10. Consequently, the service life of the copper nozzle 10 is effectively extended, ensuring good protective gas protection for welding the top cover 220 and the housing 210 of the battery cell 200, thereby improving welding effects and enhancing the welding yield.

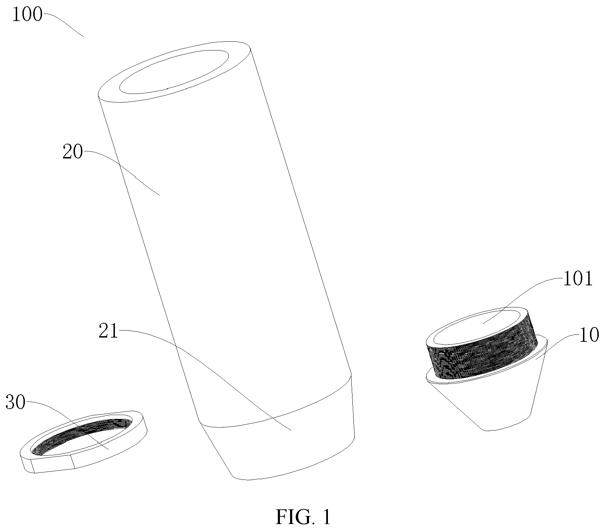

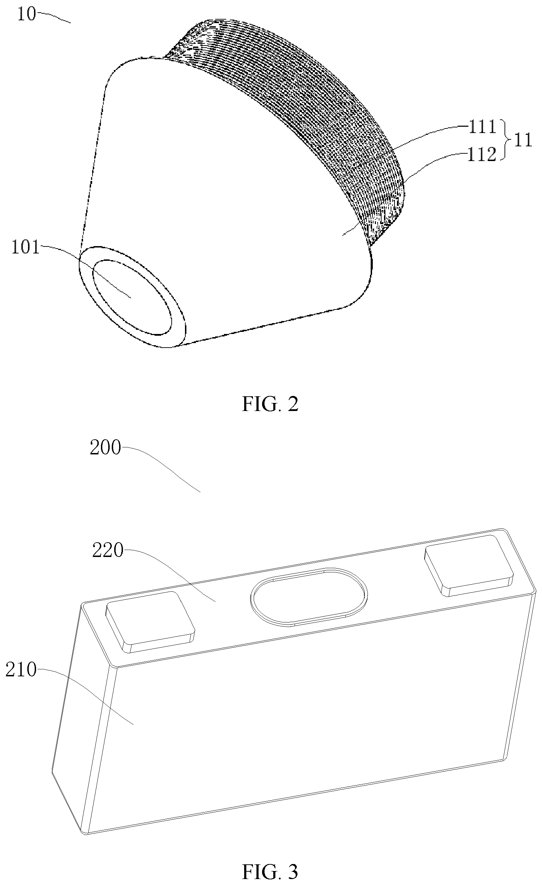

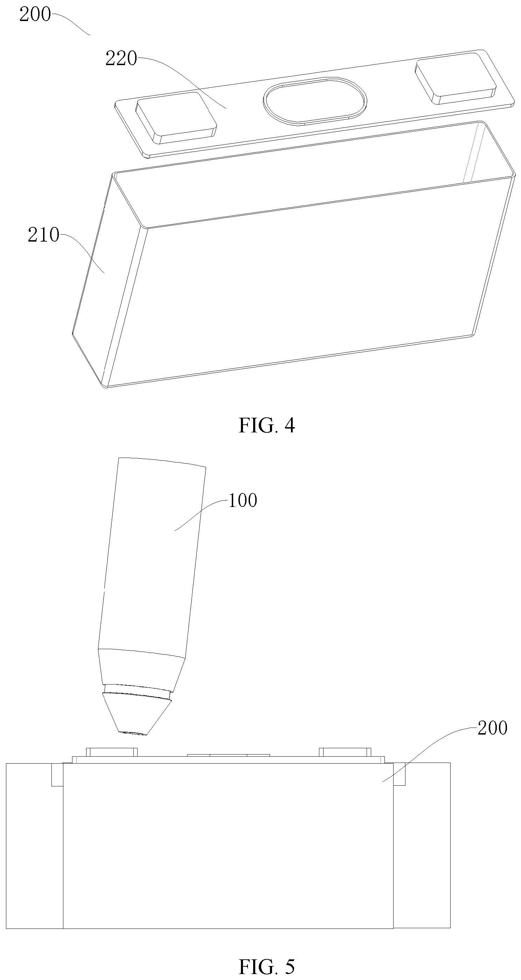

The copper nozzle 10 according to embodiments of the first aspect of this application will be described below with reference to FIG. 1 to FIG. 5. FIG. 1 is an exploded view of a copper nozzle assembly 100 according to an embodiment of this application; FIG. 2 is a schematic diagram of the copper nozzle 10 according to an embodiment of this application; FIG. 3 is a schematic diagram of a battery cell 200 according to an embodiment of this application; FIG. 4 is an exploded view of the battery cell 200 according to the embodiment of this application; and FIG. 5 is a schematic diagram of the copper nozzle assembly 100 welding the battery cell 200 according to the embodiment of this application.

As shown in FIG. 1 and FIG. 2, the copper nozzle 10 according to embodiments of the first aspect of this application is used for laser welding. The copper nozzle 10 includes a copper nozzle body 11 and a protective layer. The copper nozzle body 11 has a laser channel 101; and the protective layer covers a surface of the copper nozzle body 11, a reflectance coefficient of the protective layer being greater than a reflectance coefficient of copper, and a melting point of the protective layer being greater than a melting point of copper.

The copper nozzle 10 is configured to concentrate a protective gas and release the protective gas at a high pressure to a portion to be welded, while reducing contamination and damage to lenses in laser welding equipment by pollutants such as weld slag and smoke. The copper nozzle body 11 may be made of red copper or other materials with good thermal conductivity. The laser channel 101 of the copper nozzle body 11 is configured for laser entry and exit, as well as for guiding and releasing the protective gas. During welding, the laser exits from the laser channel 101 of the copper nozzle 10 to the portion to be welded for welding operations, and the protective gas is released along the laser channel 101 to the portion to be welded to protect the welding operation. The protective gas may be nitrogen, argon, helium, or similar gases. The protective gas removes air from the portion to be welded and cleans weld slag, smoke, and other residues generated during the welding process to facilitate smooth welding operations. The protective layer may be a zirconia ceramic layer, a bright chromium layer, a hard chromium layer, or similar materials.

The reflectance coefficient refers to the ratio of the intensity of light reflected by a surface of an object to the intensity of incident light. A higher ratio indicates greater intensity of reflected light and better reflective capability of the surface. The reflectance coefficient of copper is approximately 75%, and the reflectance coefficient of the protective layer is greater than the reflectance coefficient of copper. For example, the reflectance coefficient of the protective layer is 80%, 81%, 82%, 83%, or the like.

The melting point of copper is 1083.4°C, and the melting point of the protective layer is greater than the melting point of copper. For example, the melting point of the protective layer is 1100°C, 1200°C, 1300°C, or the like.

During welding, when the laser irradiates the housing 210 or the top cover 220 of the battery cell 200, the laser is partially reflected by the housing 210 and the top cover 220 to the surface of the copper nozzle 10. The laser irradiating the surface of the copper nozzle 10 is reflected toward the external environment by the protective layer.

It can be understood that the copper nozzle 10 is typically made of copper material. In this embodiment, the protective layer is provided on the surface of the copper nozzle 10 with the reflectance coefficient of the protective layer being greater than the reflectance coefficient of copper enhances the reflective capability of the surface of the copper nozzle 10. When the laser irradiates the surface of the copper nozzle 10, the copper nozzle 10 reflects most of the laser outward, reducing absorption of laser radiation energy by the copper nozzle 10 and thereby reducing the extent and likelihood of ablation and deformation of the copper nozzle 10 under laser irradiation. Additionally, in this embodiment, the melting point of the protective layer being greater than the melting point of copper further improves the heat resistance of the copper nozzle 10, further reducing the extent and likelihood of ablation and deformation of the copper nozzle 10. This enables the copper nozzle 10 to stably and reliably guide the protective gas toward the portion to be welded during laser welding, reducing occurrences of turbulence or slow flow velocity of the protective gas at the portion to be welded, thereby improving welding effects and enhancing the welding yield.

When the laser welds the housing 210 and the top cover 220 of the battery cell 200, weld slag generated during welding easily splashes onto the surface of the copper nozzle 10. After welding, the surface of the copper nozzle 10 requires cleaning. In this embodiment, the protective layer is provided on the surface of the copper nozzle 10, which reduces pit formation on the surface of the copper nozzle 10 due to ablation, allowing the surface of the copper nozzle 10 to maintain a relatively smooth surface, thereby facilitating cleaning of the copper nozzle 10.

In this embodiment, the protective layer is provided on the surface of the copper nozzle 10, which significantly reduces the extent and likelihood of ablation and deformation of the copper nozzle 10, enabling the copper nozzle 10 to have a longer service life and reducing the usage cost of the copper nozzle 10 to a certain extent.

According to the copper nozzle 10 of the embodiment of this application, the protective layer is provided on the surface of the copper nozzle 10 with the reflectance coefficient of the protective layer being greater than the reflectance coefficient of copper and the melting point of the protective layer being greater than the melting point of copper, which significantly extends the service life of the copper nozzle 10 and makes cleaning of the copper nozzle 10 convenient. The likelihood of ablation or deformation of the copper nozzle during welding operations is reduced, enabling the housing 210 and the top cover 220 of the battery cell 200 to achieve better welding effects and significantly improving the welding yield of laser welding.

In some embodiments of this application, the melting point of the protective layer may be greater than 1200°C.

The melting point of the protective layer is greater than 1200°C. For example, the melting point of the protective layer may be 1300°C, 1400°C, 1500°C, 1600°C, or the like.

In these embodiments, setting the melting point of the protective layer to be greater than 1200°C enables the protective layer to have a sufficiently high melting point, preventing the protective layer from being prone to ablation under laser irradiation. This reduces the likelihood of pit formation or deformation on the surface of the copper nozzle 10 during welding operations, extends the service life of the copper nozzle 10, allows stable and effective welding of the battery cell 200 by the laser, and improves the welding yield.

In one embodiment of this application, the melting point of the protective layer may be greater than or equal to 1800°C.

The melting point of the protective layer is greater than or equal to 1800°C. For example, the melting point of the protective layer may be 1800°C, 1900°C, 2000°C, or the like.

In this embodiment, the melting point of the protective layer is further limited to be greater than or equal to 1800°C, which enables the protective layer to better withstand laser irradiation, further reducing the probability of ablation and deformation of the copper nozzle 10. This enhances the stability and durability of the copper nozzle 10, allowing the battery cell 200 to achieve better welding effects and further improving the welding yield of laser welding.

In some embodiments of this application, the reflectance coefficient of the protective layer may be greater than or equal to 90%.

In these embodiments, the reflectance coefficient of the protective layer is greater than or equal to 90%. For example, the reflectance coefficient of the protective layer may be 90%, 91%, 92%, 93%, 94%, 95%, 96%, 97%, 98%, 99%, or the like.

In these embodiments, setting the reflectance coefficient of the protective layer to be greater than or equal to 90% ensures high reflective capability of the protective layer. When the laser is reflected to the surface of the copper nozzle 10, most of the energy of the laser irradiating the surface of the copper nozzle 10 is reflected by the protective layer to the external environment, subjecting the surface of the copper nozzle 10 to only a minimal heating effect from laser radiation. This further reduces the likelihood of ablation and thermal deformation on the surface of the copper nozzle 10, allowing the copper nozzle 10 to maintain a good surface structure. When the laser welds the housing 210 and the top cover 220 of the battery cell 200, the copper nozzle can stably and effectively guide the protective gas, enabling the portion to be welded to achieve stable and effective welding effects, thereby further improving the welding yield.

In some embodiments of this application, the protective layer may be a bright chromium layer.

Chromium has a high melting point and a large reflectance coefficient, with a melting point of approximately 1907°C. The bright chromium layer may be formed on the surface of the copper nozzle body 11 by bright chromium plating, resulting in a smooth and hard surface.

In these embodiments, the protective layer is provided as the bright chromium layer, which allows the protective layer to form a smooth surface on the copper nozzle body 11, providing good reflectivity to laser light and enhancing the overall structural strength of the copper nozzle 10. This reduces the likelihood of ablation or deformation of the copper nozzle 10 during welding, resulting in better laser welding effects. The smooth surface formed by the protective layer also facilitates cleaning of weld slag from the copper nozzle 10 after welding.

In some embodiments of this application, a thickness of the protective layer may be greater than 0.01 mm.

The thickness of the protective layer is greater than 0.01 mm. For example, the thickness of the protective layer may be 0.02 mm, 0.03 mm, 0.04 mm, 0.05 mm, 0.06 mm, 0.07 mm, 0.08 mm, or the like.

It can be understood that laser irradiation on an object causes penetration to a certain depth. In these embodiments, setting the thickness of the protective layer to be greater than 0.01 mm ensures that the protective layer has sufficient thickness to stably and effectively reflect the laser and withstand heat from laser irradiation. This enables the protective layer to maintain a good surface shape during welding, reducing the likelihood of ablation and deformation on the surface of the protective layer, and allowing the copper nozzle 10 to stably guide the protective gas. Consequently, the welding operation of the housing 210 and the top cover 220 of the battery cell 200 becomes more stable and reliable.

In one embodiment of this application, the thickness of the protective layer may be less than or equal to 0.1 mm.

In this embodiment, the thickness of the protective layer is limited to be less than or equal to 0.1 mm. For example, the thickness of the protective layer may be 0.1 mm, 0.09 mm, 0.08 mm, 0.07 mm, or the like.

In this embodiment, the thickness of the protective layer is limited to be less than or equal to 0.1 mm, which ensures that the thickness of the protective layer does not become excessively thick while meeting welding requirements, avoiding additional production costs during the manufacturing of the copper nozzle 10. This reduces the production cost of the copper nozzle 10 to a certain extent.

In one embodiment of this application, the thickness of the protective layer may be less than or equal to 0.05 mm.

In this embodiment, the thickness of the protective layer is limited to be less than or equal to 0.05 mm. For example, the thickness of the protective layer may be 0.05 mm, 0.04 mm, 0.03 mm, 0.02 mm, or the like.

In this embodiment, the maximum thickness of the protective layer is further limited, which enables production of the protective layer with less material while meeting welding requirements, reducing the manufacturing cost of the protective layer and thereby further lowering the production cost of the copper nozzle 10.

In some embodiments of this application, as shown in FIG. 1 and FIG. 2, the protective layer may cover at least an end face, an inner wall surface, and an outer peripheral surface of an end of the copper nozzle body 11 oriented toward an outlet of the laser channel 101.

The end face of the end of the copper nozzle body 11 oriented toward the outlet of the laser channel 101 refers to the end face of the copper nozzle 10 oriented toward the portion to be welded of the battery cell 200 by the laser. During laser welding, the end face of the copper nozzle body 11 faces the welding position. The inner wall surface of the copper nozzle body 11 refers to the wall surface of the laser channel 101 within the copper nozzle body 11. The laser passes through the laser channel 101 and exits from the outlet of the laser channel 101 at the end face of the copper nozzle body 11 toward the portion to be welded of the battery. When the laser performs welding operations on the housing 210 and the top cover 220 of the battery cell 200, the laser is partially reflected to the end face, the inner wall surface, and the outer peripheral surface of the copper nozzle body 11.

In these embodiments, the protective layer is provided to cover at least the end face, the inner wall surface, and the outer peripheral surface of the end of the copper nozzle body 11 oriented toward the outlet of the laser channel 101, which means that the protective layer may cover the end face, the inner wall surface, and the outer peripheral surface of the end of the copper nozzle body 11 oriented toward the outlet of the laser channel 101, or the protective layer may completely cover the surfaces of the copper nozzle body 11, including the end face, the inner wall surface, and the outer peripheral surface.

In these embodiments, the protective layer is provided to cover at least the end face, the inner wall surface, and the outer peripheral surface of the end of the copper nozzle body 11 oriented toward the outlet of the laser channel 101, which effectively enhances reflection and reduces ablation and deformation of the copper nozzle 10. This allows the end face, the inner wall surface, and the outer peripheral surface of the copper nozzle 10 oriented toward the outlet of the laser welding channel to maintain a good surface structure during welding, reducing the likelihood of ablation pits and structural deformation. Consequently, the copper nozzle 10 achieves a longer service life and can stably and reliably guide the protective gas, ensuring stable and effective laser welding.

In some embodiments of this application, as shown in FIG. 2, the end of the copper nozzle body 11 oriented toward the outlet of the laser channel 101 may be formed as a tapered section 112, with a cross-sectional dimension of the tapered section 112 gradually decreasing in a direction from an inlet to the outlet of the laser channel 101, and the protective layer completely covers an inner surface and an outer surface of the tapered section 112.

The end of the copper nozzle body 11 oriented toward the outlet of the laser channel 101 is formed as the tapered section 112, which means that the tapered section 112 may be conical. Specifically, as shown in FIG. 2, an end of the tapered section 112 oriented toward the outlet of the laser channel 101 may form an end face, the end face may be flat, the outlet of the laser channel 101 is formed on the end face, and the cross-sectional dimension of the tapered section 112 gradually decreases in the direction from the inlet to the outlet of the laser channel 101.

In these embodiments, the end of the copper nozzle body 11 oriented toward the outlet of the laser channel 101 is formed as the tapered section 112, with the cross-sectional dimension of the tapered section 112 gradually decreasing in the direction from the inlet to the outlet of the laser channel 101, which provides a larger welding space between the end of the copper nozzle 10 oriented toward the portion to be welded and the portion to be welded during welding operations. This reduces the likelihood of contact between the copper nozzle 10 and the battery cell 200 during welding movement to a certain extent and allows weld slag, smoke, and other residues generated during welding to more easily splash or disperse into the external space. This ensures a good welding environment for the portion to be welded under the flow of the protective gas, allowing the battery cell 200 to achieve good welding effects.

In these embodiments, completely covering the inner surface and the outer surface of the tapered section 112 with the protective layer enables the tapered section 112 to stably and reliably reflect the laser and withstand heat generated during laser irradiation during welding operations. This allows the copper nozzle 10 to maintain a good surface structure, stably and effectively guiding the protective gas, thereby improving laser welding effects and enhancing the welding yield.

In one embodiment of this application, as shown in FIG. 1 and FIG. 2, a cross-sectional dimension of the laser channel 101 may gradually decrease in a direction from the inlet to the outlet.

The shape and path of the laser channel 101 may be adapted to the shape of an outer peripheral surface of the tapered section 112 of the copper nozzle 10, and a thickness of the tapered section 112 of the copper nozzle 10 may be consistent along an extension direction of the laser channel 101.

In this embodiment, the cross-sectional dimension of the laser channel 101 gradually decreases in the direction from the inlet to the outlet, which effectively guides and increases the flow velocity of the protective gas. This enables the protective gas to flow out from the outlet of the laser channel 101 to the portion to be welded at a higher velocity, allowing the protective gas to provide better gas protection to the portion to be welded during laser welding. Optionally, the laser channel 101 may be a conical channel structure.

In one embodiment of this application, as shown in FIG. 2, the copper nozzle body 11 may further include a connecting section 111, the connecting section 111 being connected to an end of the tapered section 112 facing away from the outlet of the laser channel 101, an outer surface of the connecting section 111 being formed with external threads, and the protective layer completely covering the external threads.

The connecting section 111 is configured to connect and fix the copper nozzle 10 to other components of laser welding equipment. The outer surface of the connecting section 111 being formed with the external threads allows the copper nozzle 10 to be threadedly fixed to other components.

In this embodiment, the copper nozzle body 11 is provided with the connecting section 111 having the external threads, enabling easy assembly and disassembly of the copper nozzle 10. The connecting section has a simple structure and exhibits good usability.

It can be understood that in the prior art, during laser welding, laser radiation heats the copper nozzle, causing the external threads of the copper nozzle to easily oxidize and form oxides. These oxides accumulate in the external threads, making disassembly of the copper nozzle difficult.

In this embodiment, completely covering the external threads with the protective layer effectively enhances high-temperature resistance at the external threads and reduces oxidation of the external threads. This allows for easier and more convenient disassembly of the copper nozzle 10 after welding operations or when replacement is needed, reducing downtime for replacing the copper nozzle 10 and improving welding operation efficiency and production capacity of the battery cell 200.

In some embodiments of this application, the copper nozzle body 11 may be a chromium-zirconium copper alloy component.

Chromium-zirconium copper alloy offers better strength and hardness than copper material, with good thermal conductivity, high softening temperature, and excellent wear resistance.

In these embodiments, the copper nozzle body 11 is provided as the chromium-zirconium copper alloy component, which further reduces deformation of the copper nozzle body 11 in high-temperature environments. This enables the copper nozzle 10 to maintain its shape effectively during welding, significantly extending the service life of the copper nozzle 10 and allowing more stable and reliable guidance of the protective gas. Consequently, the housing 210 and the top cover 220 of the battery cell 200 achieve stable and effective welding effects.

The copper nozzle assembly 100 according to embodiments of the second aspect of this application will be described below with reference to FIG. 1 to FIG. 5.

As shown in FIG. 1, the copper nozzle assembly 100 according to an embodiment of this application includes the copper nozzle 10 according to the embodiment of the first aspect of this application and a connecting pipe 20, the connecting pipe 20 being connected to an end of the copper nozzle 10 oriented toward an inlet of the laser channel 101.

The connecting pipe 20 may be a copper pipe, and a shape and a size of the connecting pipe 20 may be adapted to the copper nozzle 10 for connection with the copper nozzle 10. The connecting pipe 20 may be threadedly connected to the copper nozzle 10. The connecting pipe 20 is configured to guide the protective gas. During laser welding operations, the laser passes through the connecting pipe 20 into the laser channel 101 of the copper nozzle 10 and exits from the outlet of the laser channel 101, while the protective gas flows along the connecting pipe 20 into the laser channel 101 of the copper nozzle 10 and is released from the outlet of the laser channel 101 to the portion to be welded of the battery cell 200.

According to the copper nozzle assembly 100 of the embodiment of this application, the copper nozzle 10 of the embodiment of the first aspect described above is incorporated, providing the protective layer on the surface of the copper nozzle 10 with the reflectance coefficient of the protective layer being greater than the reflectance coefficient of copper and the melting point of the protective layer being greater than the melting point of copper, which significantly extends the service life of the copper nozzle 10 and makes cleaning of the copper nozzle 10 convenient. The likelihood of ablation or deformation of the copper nozzle during welding operations is reduced, enabling the housing 210 and the top cover 220 of the battery cell 200 to achieve better welding effects and significantly improving the welding yield of laser welding.

In some embodiments of this application, as shown in FIG. 1, the connecting pipe 20 may be threadedly connected to the copper nozzle 10.

The connecting pipe 20 being threadedly connected to the copper nozzle 10 means that, specifically, the connecting pipe 20 may be formed with external threads and the copper nozzle 10 correspondingly formed with internal threads, or the connecting pipe 20 may be formed with internal threads and the copper nozzle 10 correspondingly formed with external threads. The connecting pipe 20 and the copper nozzle 10 are fixedly connected by mating the external threads with the internal threads. The connecting pipe 20 may also be fixedly connected to the copper nozzle 10 via threaded fasteners.

In these embodiments, the connecting pipe 20 is threadedly connected to the copper nozzle 10, featuring a simple structure that ensures secure and reliable connection. This facilitates assembly and disassembly of the copper nozzle 10 and the connecting pipe 20, making replacement of the copper nozzle 10 more convenient.

In one embodiment of this application, as shown in FIG. 1 and FIG. 2, the copper nozzle 10 may have external threads for threaded connection with the connecting pipe 20, and the copper nozzle assembly 100 may further include a fastening nut 30, the fastening nut 30 being threadedly sleeved on the external threads of the copper nozzle 10 and disposed between the connecting pipe 20 and the copper nozzle 10.

In this embodiment, the copper nozzle 10 having the external threads means that the connecting pipe 20 is correspondingly provided with internal threads. In connecting the connecting pipe 20 to the copper nozzle 10, the external threads of the copper nozzle 10 may be partially screwed into the connecting pipe 20 as needed. The fastening nut 30 may be made of stainless steel and serves to secure the connection between the connecting pipe 20 and the copper nozzle 10. After the connecting pipe 20 and the copper nozzle 10 are threadedly connected as required, the fastening nut 30 is rotated toward the connecting pipe 20 and pressed against an end of the connecting pipe 20 oriented toward the copper nozzle 10.

It can be understood that during assembly of the connecting pipe 20 and the copper nozzle 10, a certain adjustment clearance needs to be maintained between the copper nozzle 10 and the connecting pipe 20 to allow for adjustment of the copper nozzle 10. The copper nozzle 10 is threadedly connected to the connecting pipe 20 via a portion of the external threads segment. In this embodiment, the fastening nut 30 is provided to secure the connecting pipe 20 and the copper nozzle 10, which ensures stable and reliable connection and fixation between the copper nozzle 10 and the connecting pipe 20 after threaded connection and distance adjustment, enhancing the stability and firmness of the connection between the copper nozzle 10 and the connecting pipe 20.

In some embodiments of this application, as shown in FIG. 1, an end of the connecting pipe 20 oriented toward the copper nozzle 10 may have a constricted section 21, with a cross-sectional dimension of the constricted section 21 gradually decreasing in a direction from the connecting pipe 20 toward the copper nozzle 10.

The cross-sectional dimension of the constricted section 21 refers to an outer diameter dimension of the constricted section 21. In the direction from the connecting pipe 20 toward the copper nozzle 10, the outer diameter of the constricted section 21 gradually decreases. An outer diameter of an end face of the constricted section 21 oriented toward the copper nozzle 10 may be the same as an outer diameter of an end face of the tapered section 112 of the copper nozzle 10 oriented toward the connecting pipe 20.

In these embodiments, the constricted section 21 with the gradually decreasing cross-sectional dimension at the end of the connecting pipe 20 oriented toward the copper nozzle 10 is formed, which allows the end of the connecting pipe 20 oriented toward the copper nozzle 10 to form a relatively smooth surface along an axial direction of the connecting pipe 20 after being fixedly connected to the copper nozzle 10. The constricted section 21 reduces an end face area of the end of the connecting pipe 20 oriented toward the copper nozzle 10, providing a larger space on the side of the copper nozzle 10 oriented toward the connecting pipe 20. This reduces obstruction by the constricted section 21 of the connecting pipe 20 to weld slag and smoke as the weld slag splashes or the smoke escapes toward the outside of the copper nozzle assembly 100 during laser welding operations, facilitating smoother laser welding operations to a certain extent.

The laser welding equipment according to embodiments of the third aspect of this application will be described below with reference to FIG. 1 to FIG. 5.

As shown in FIG. 1 to FIG. 5, the laser welding equipment according to the embodiment of this application includes the copper nozzle assembly 100 according to the embodiments of the second aspect of this application.

Other configurations and operations of the laser welding equipment according to the embodiments of this application are known to persons skilled in the art and will not be described in detail herein.

According to the laser welding equipment of the embodiment of this application, the copper nozzle assembly 100 of the embodiment of the second aspect described above is incorporated, providing the protective layer on the surface of the copper nozzle 10 with the reflectance coefficient of the protective layer being greater than the reflectance coefficient of copper and the melting point of the protective layer being greater than the melting point of copper, which significantly extends the service life of the copper nozzle 10 and makes cleaning of the copper nozzle 10 more convenient. The likelihood of ablation or deformation of the copper nozzle during welding operations is reduced, enabling the housing 210 and the top cover 220 of the battery cell 200 to achieve better welding effects and significantly improving the welding yield of laser welding.

A specific embodiment of the laser welding equipment according to this application will be described below with reference to FIG. 1 to FIG. 5.

As shown in FIG. 1 to FIG. 5, the laser welding equipment is used to weld the top cover 220 to the housing 210 of the battery cell 200. The laser welding equipment includes the copper nozzle assembly 100, the copper nozzle assembly 100 being configured to allow the laser to pass through to the portion to be welded for welding operations and to guide the protective gas, enabling the protective gas to flow stably from the copper nozzle assembly 100 and release to the portion to be welded for gas protection during welding.

The copper nozzle assembly 100 includes the connecting pipe 20, the copper nozzle 10, and the fastening nut 30. The connecting pipe 20 includes the constricted section 21, the constricted section 21 being formed with internal threads. A side of the copper nozzle 10 oriented toward the connecting pipe 20 is formed with the connecting section 111, the connecting section 111 being formed with external threads. The connecting pipe 20 and the copper nozzle 10 are threadedly connected via the internal threads and the external threads, and the fastening nut 30 is screwed onto the external threads of the copper nozzle 10 and abuts against the connecting pipe 20 for fixation.

The copper nozzle 10 includes a copper nozzle body 11 and a protective layer. The copper nozzle body 11 has the laser channel 101, the laser channel 101 having an outlet and an inlet communicating with the connecting pipe 20. A diameter dimension of the outlet of the laser channel 101 is typically 8 mm to 10 mm. The copper nozzle body 11 forms the connecting section 111, and an end of the copper nozzle body 11 facing away from the connecting pipe 20 is formed with a conical section, an end of the conical section facing away from the connecting pipe 20 forming an end face, the end face being flat. The surface of the copper nozzle body 11 is formed with the protective layer, the protective layer being a bright chromium layer with a thickness of 0.05 mm. The bright chromium layer completely covers the surface of the copper nozzle body 11, and the copper nozzle body 11 is made of chromium-zirconium copper material.

During assembly of the copper nozzle assembly 100, the fastening nut 30 is screwed onto the external threads of the copper nozzle 10, and the copper nozzle 10 is then threadedly connected to the connecting pipe 20. A depth to which the copper nozzle 10 is screwed into the connecting pipe 20 is adjusted as needed. After adjustment, the fastening nut 30 is rotated toward the connecting pipe 20 and pressed against an end face of the end of the connecting pipe 20 oriented toward the copper nozzle 10.

When the laser welding equipment welds the housing 210 and the top cover 220 of the battery cell 200, the copper nozzle assembly 100 is arranged inclined relative to a surface of the top cover 220, with the copper nozzle 10 oriented toward a welding position between the top cover 220 and the housing 210. The copper nozzle assembly 100 moves along the portion to be welded to weld the top cover 220 and the housing 210. During welding, the protective gas is released from the outlet of the laser channel 101 of the copper nozzle 10 to the portion to be welded.

According to the laser welding equipment of the embodiment of this application, the protective layer is provided on the surface of the copper nozzle 10 with the reflectance coefficient of the protective layer being greater than the reflectance coefficient of copper and the melting point of the protective layer being greater than the melting point of copper, which significantly extends the service life of the copper nozzle 10 and makes cleaning of the copper nozzle 10 convenient. When the copper nozzle 10 is used to weld the housing 210 and the top cover 220 of the battery cell 200, better welding effects are achieved, significantly improving the welding yield of laser welding. Verification shows that the copper nozzle 10 plated with the bright chromium layer can increase the service life of the copper nozzle 10 by more than ten times.

In conclusion, it should be noted that the above embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the technical features mentioned in the various embodiments can be combined in any manner. This application is not limited to the specific embodiments disclosed in this specification but includes all technical solutions falling within the scope of the claims.

## Claims

1. A copper nozzle for laser welding, comprising:
a copper nozzle body (11), the copper nozzle body (11) having a laser channel (101);
a protective layer, the protective layer covering a surface of the copper nozzle body (11), wherein a reflectance coefficient of the protective layer is greater than a reflectance coefficient of copper, and a melting point of the protective layer is greater than a melting point of copper.

2. The copper nozzle according to claim **1,** wherein the melting point of the protective layer is greater than 1200°C.

3. The copper nozzle according to any one of claims 1 and 2, wherein the melting point of the protective layer is greater than or equal to 1800°C.

4. The copper nozzle according to any one of claims 1 to 3, wherein the reflectance coefficient of the protective layer is greater than or equal to 90%.

5. The copper nozzle according to any one of claims 1 to 4, wherein the protective layer is a bright chromium layer.

6. The copper nozzle according to any one of claims 1 to 5, wherein a thickness of the protective layer is greater than 0.01 mm.

7. The copper nozzle according to claim 6, wherein the thickness of the protective layer is less than or equal to 0.1 mm.

8. The copper nozzle according to any one of claims 6 and 7, wherein the thickness of the protective layer is less than or equal to 0.05 mm.

9. The copper nozzle according to any one of claims 1 to 8, wherein the protective layer covers at least an end face, an inner wall surface, and an outer peripheral surface of an end of the copper nozzle body (11) oriented toward an outlet of the laser channel (101).

10. The copper nozzle according to any one of claims 1 to 9, wherein an end of the copper nozzle body (11) oriented toward an outlet of the laser channel (101) is formed as a tapered section (112), with a cross-sectional dimension of the tapered section (112) gradually decreasing in a direction from an inlet to the outlet of the laser channel (101), and the protective layer completely covers an inner surface and an outer surface of the tapered section (112).

11. The copper nozzle according to claim 10, wherein the copper nozzle body (11) further comprises: a connecting section (111), the connecting section (111) being connected to an end of the tapered section (112) facing away from the outlet of the laser channel (101), an outer surface of the connecting section (111) being formed with external threads, and the protective layer completely covering the external threads.

12. The copper nozzle according to any one of claims 1 to 11, wherein the copper nozzle body (11) is a chromium-zirconium copper alloy component.

13. A copper nozzle assembly, comprising:
the copper nozzle according to any one of claims 1 to 12;
a connecting pipe (20), the connecting pipe (20) being connected to an end of the copper nozzle oriented toward an inlet of the laser channel (101).

14. The copper nozzle assembly according to claim 13, wherein the connecting pipe (20) is threadedly connected to the copper nozzle.

15. The copper nozzle assembly according to claim 14, wherein the copper nozzle has external threads for threaded connection with the connecting pipe (20), the copper nozzle assembly further comprising: a fastening nut (30), the fastening nut (30) being threadedly sleeved on the external threads of the copper nozzle and disposed between the connecting pipe (20) and the copper nozzle.

16. The copper nozzle assembly according to any one of claims 13 to 15, wherein an end of the connecting pipe (20) oriented toward the copper nozzle has a constricted section (21), with a cross-sectional dimension of the constricted section (21) gradually decreasing in a direction from the connecting pipe (20) toward the copper nozzle.

17. Laser welding equipment, comprising the copper nozzle assembly according to any one of claims 13 to 16.
